**Europäisches Patentamt**

**European Patent Office**

**Office européen des brevets**

(11) Veröffentlichungsnummer: **0 219 897**
**B1**

(12) **EUROPÄISCHE PATENTSCHRIFT**

(45) Veröffentlichungstag der Patentschrift:
**29.11.89**

(21) Anmeldenummer: **86201662.3**

(22) Anmeldetag: **24.09.86**

(51) Int. Cl.⁴: **G01T 1/29**

(54) **Anordnung zum Erzeugen von Röntgenaufnahmen mittels eines Fotoleiters.**

(30) Priorität: **30.09.85 DE 3534768**

(43) Veröffentlichungstag der Anmeldung:
**29.04.87 Patentblatt 87/18**

(45) Bekanntmachung des Hinweises auf die Patenterteilung:
**29.11.89 Patentblatt 89/48**

(84) Benannte Vertragsstaaten:
**DE FR GB NL**

(56) Entgegenhaltungen:
**FR-A- 2 305 743**
**FR-A- 2 330 231**
**US-A- 4 134 137**
**US-A- 4 408 871**

(73) Patentinhaber: **Philips Patentverwaltung GmbH,**
**Wendenstrasse 35 Postfach 10 51 49,**
**D-2000 Hamburg 1(DE)**

(84) Benannte Vertragsstaaten: **DE**

(73) Patentinhaber: **N.V. Philips' Gloeilampenfabrieken,**
**Groenewoudseweg 1, NL-5621 BA Eindhoven(NL)**

(84) Benannte Vertragsstaaten: **FR GB NL**

(72) Erfinder: **Conrads, Norbert, Stöck 9, B-4729 Hauset(BE)**
Erfinder: **Hillen, Walter, Dr., Binsenweg 2,**
**D-5100 Aachen(DE)**
Erfinder: **Quadflieg, Peter, Kirchrather Strasse 41,**
**D-5100 Aachen(DE)**
Erfinder: **Schiebel, Ulrich, Dr., Zehntweg 60,**
**D-5100 Aachen(DE)**

(74) Vertreter: **Hartmann, Heinrich, Dipl.-Ing. et al, Philips**
**Patentverwaltung GmbH**
**Wendenstrasse 35 Postfach 10 51 49,**
**D-2000 Hamburg 1(DE)**

## Beschreibung

Die Erfindung betrifft eine Anordnung zum Erzeugen von Röntgenaufnahmen mittels eines Röntgenstrahlung in ein Ladungsmuster umsetzenden Fotoleiters mit einer Aufladeeinrichtung zum örtlich gleichmäßigen Aufladen der Oberfläche des Fotoleiters und mit einer Abtasteinrichtung, die zum Übersetzen der Ladungsdichte an verschiedenen Punkten der Oberfläche des Fotoleiters mehrere in einer Reihe angeordnete Influenzsonden enthält. Eine solche Anordnung ist im wesentlichen aus der DE-OS 29 48 660 bekannt sowie aus der US-PS 4,l34,l37 - dort allerdings nur in Verbindung mit einer einzigen Influenzsonde.

Ein Fotoleiter ist normalerweise ein Nichtleiter. Wird er jedoch einer Röntgenstrahlung ausgesetzt, dann nimmt seine Leitfähigkeit während der Bestrahlung an den bestrahlten Stellen zu, so daß an diesen Stellen die durch eine vorherige Aufladung erzeugte Ladungsdichte verringert wird, und zwar um so mehr, je größer die Intensität der Röntgenstrahlung ist und je länger sie auf den Fotoleiter einwirkt, d.h. je größer die Dosis an der betreffenden Stelle ist. Das auf diese Weise auf der Oberfläche des Fotoleiters erzeugte zweidimensionale Ladungsmuster, das im wesentlichen der räumlichen Verteilung der Röntgenstrahlungsintensität entspricht, wird von der Abtasteinrichtung in elektrische Signale umgesetzt. Diese werden verstärkt, gefiltert, digitalisiert und in einem Speicher gespeichert. Sie sind dann der digitalen Bildverarbeitung zugänglich.

Bei den bekannten Anordnungen ist der Fotoleiter auf einen ebenen Träger aufgebracht. Nach der Röntgenbelichtung muß die Ladungsverteilung mit Hilfe der Abtasteinrichtung ausgelesen werden, die dabei mäanderförmig oder in ähnlicher Weise über die Oberfläche des Fotoleiters geführt werden muß. In der Praxis entlädt sich der Fotoleiter nicht nur während der Röntgenbelichtung, sondern auch davor und danach. Um die dadurch entstehenden Fehler klein zu halten, ist es erforderlich, daß die Zeit zwischen dem Ende der Aufladung und dem Ende der Abtastung, insbesondere auch zwischen der Röntgenbelichtung und dem Ende der Abtastung, möglichst kurz gemacht wird. Dies ist bei der beschriebenen z.B. mäanderförmigen Abtastung kaum möglich. Eine schnelle Abtastung könnte zwar erreicht werden, wenn so viele Influenzsonden in der Abtasteinrichtung vorhanden wären, daß die Ladungsverteilungen an den Bildpunkten einer ganzen Zeile eines Röntgenbildes gleichzeitig erfaßt werden könnten, jedoch ist die Herstellung einer derartigen Abtasteinrichtung mit einer auch für die Abtastung größerer Röntgenaufnahmen ausreichenden Anzahl von Influenzsonden noch nicht zufriedenstellend gelungen.

Bei derartigen Anordnungen hängt die Amplitude des von der Influenzsonde gelieferten Signals nicht nur von der Ladungsdichte an der jeweils abgetasteten Stelle ab, sondern auch von dem Abstand zwischen der Oberfläche des Fotoleiters und der Influenzsonde. Schon eine Abstandsänderung von wenigen µm bewirkt eine wesentliche Verfälschung des Signals. Während der Abtastung der Oberfläche des Fotoleiters durch die Abtasteinrichtung ist es also erforderlich, daß der Abstand der Influenzsonden weitgehend konstant bleibt. Daraus resultieren extreme Forderungen für die Mechanik der Abtasteinrichtung und für die Planheit der Fotoleiterschicht.

Es ist Aufgabe der vorliegenden Erfindung eine Anordnung der eingangs genannten Art so auszugestalten, daß ein schnelles und präzises Auslesen der Ladungsdichte mit relativ geringem Aufwand erfolgen kann.

Diese Aufgabe wird erfindungsgemäß dadurch gelöst, daß der Fotoleiter auf dem Außenmantel eines kreiszylinderischen Trägers aufgebracht ist, daß die Röntgenstrahlung durch mindestens eine schlitzförmige Blende, deren Hauptausdehnungsrichtung parallel zur Zylinderachse des Trägers verläuft, auf den Fotoleiter trifft, daß eine Antriebseinrichtung zum Drehen des Trägers um die Zylinderachse und zum Verschieben des ausgeblendeten Strahlenfächers relativ zum Untersuchungsbereich synchron mit der Drehung des Trägers vorgesehen ist, daß die Influenzsonden in Richtung der Zylinderachse gegeneinander versetzt angeordnet sind, daß die Antriebseinrichtung so gestaltet ist, daß sie den Träger nach der Röntgenbelichtung weiterdreht und daß die Aufladeeinrichtung so gestaltet ist, daß sie den Fotoleiter in Richtung der Zylinderachse auf seiner gesamten Länge aufladen kann.

Bei der Erfindung ist also der Fotoleiter auf den Außenmantel eines kreiszylindrischen Trägers aufgebracht. Ein zylindrischer Träger mit exakt kreisförmigem Querschnitt läßt sich aber wesentlich leichter herstellen als ein exakt ebener Träger. Ebenso läßt sich auf einen solchen Träger eine gleichmäßig dicke Fotoleiterschicht insbesondere durch Aufdampfen wesentlich leichter aufbringen als auf einen ebenen Träger, weil der Träger während des Aufdampfprozesses um seine Achse gedreht werden kann, so daß sich auf seinem Umfang eine gleichmäßig dicke Selenschicht ergibt. Aus diesem Grunde und weil das Abtasten der Ladungsverteilung in Umfangsrichtung des Trägers lediglich eine Drehung des Trägers erfordert, läßt sich die Ladungsverteilung auf der Oberfläche des Fotoleiters wesentlich exakter und wesentlich schneller erfassen als bei einem ebenen Fotoleiter. Die vollständige Abtastung der Oberfläche des Fotoleiters erfordert lediglich die Verschiebung der Influenzsonden in einer Richtung und nicht wie bei einer ebenen Platte in zwei zueinander senkrechten Richtungen. Das Aufladen erfolgt dadurch, daß die Aufladeeinrichtung vor einer Aufnahme aktiviert und der Träger in Drehung versetzt wird, so daß die Oberfläche des Fotoleiters während der Drehung zeilenweise (die Zeilen verlaufen dabei parallel zur Drehachse bzw. zur Zylinderachse) aufgeladen wird.

Es sei an dieser Stelle erwähnt, daß aus der US-PS 3,832,546 an sich eine Anordnung zum Erzeugen von Röntgenaufnahmen bekannt ist, die einen Träger mit kreiszylindrischem Querschnitt für das Aufnahmemedium aufweist, bei der die Röntgenstrahlung durch mindestens eine schlitzförmige Blende, deren Hauptausdehnungsrichtung parallel zur Zylinderachse verläuft, auf den Träger trifft und bei der eine Antriebseinrichtung zum Drehen des Trägers um die Zylinderachse und zum Verschieben des ausgeblendeten Strahlenbündels relativ zum Untersuchungsbereich synchron mit der Drehung des Trägers vorgesehen ist. Der Träger umfaßt dabei zwei konzentrische Elektrodenzylinder, die ein unter relativ hohem Druck stehendes Gasvolumen einschließen. Während der Röntgenbelichtung wird das Gas ionisiert und die dabei erzeugten Ladungsträger werden auf eine dielektrische Folie beschleunigt, die entweder auf der Innenfläche der äußeren Elektrode oder auf der Außenfläche der inneren Elektrode angebracht ist. Auf diese Weise ergibt sich auf der dielektrischen Folie eine Ladungsverteilung, die nach ihrer Entnahme auf bekannte Weise in ein sichtbares Bild umgesetzt werden kann.

Durch die zylinderförmige Gestaltung der Elektroden soll dabei eine Anordnung geschaffen werden, die einerseits stark genug ist, um bei dem erforderlichen hohen Gasdruck den Elektrodenabstand überall gleichmäßig zu halten und die andererseits genügend dünn ist, um das Eintreten von Röntgenstrahlen in das Gasvolumen zu gestatten.

Weiterhin ist aus der EP-OS 0 094 843, insb. Fig. 8, eine Anordnung zum Erzeugen von Röntgenaufnahmen bekannt, bei der ein stimulierbarer Phosphor auf dem Außenmantel eines kreiszylindrischen Trägers aufgebracht ist und bei dem eine Antriebseinrichtung zum Drehen des Trägers um die Zylinderachse vorgesehen ist. Der stimulierbare Phosphor wird durch die Röntgenbelichtung angeregt, so daß er bei der Abtastung mit einem Laser Licht emittiert, dessen Intensität der Intensität der Röntgenstrahlung entspricht. Der stimulierbare Phosphor ist dabei in drei oder vier Abschnitten auf dem Träger angebracht, von denen bei einer Aufnahme jeweils einer belichtet wird, und zwar alle Bildpunkte der Aufnahme gleichzeitig. Nach der Aufnahme wird dieser Abschnitt durch Drehen des Trägers in eine Position gebracht, in der er mittels eines Lasers und eines Ablenkspiegels ausgelesen werden kann.

Wie bereits erwähnt, ist es praktisch nicht möglich eine Abtasteinrichtung zu schaffen, die genügend Sonden aufweist, um gleichzeitig alle Bildpunkte einer Zeile eines Bildes auf dem Fotoleiter abzutasten; eine solche Abtasteinrichtung würde zum Erfassen der Ladungsdichte auf der gesamte Oberfläche des Fotoleiters lediglich eine einzige Umdrehung des Trägers erfordern. Eine Weiterbildung der Erfindung, die von einer Abtasteinrichtung ausgeht, die wesentlich weniger Influenzsonden aufweist als eine Zeile Bildpunkte, sieht vor, daß eine Einrichtung zur Verschiebung der Abtasteinrichtung parallel zur Zylinderachse vorgesehen ist und daß der Mittelwert der Verschiebungsgeschwindigkeit klein ist im Vergleich zur Umfangsgeschwindigkeit des Trägers. Damit auch in diesem Fall die Ladungsverteilung auf der Oberfläche des Fotoleiters vollständig erfaßt werden kann, muß der Träger N vollständige Umdrehungen ausführen, wobei N das Verhältnis zwischen der Zahl der Bildpunkte in einer Zeile und der Zahl der Influenzsonden ist. Die Verschiebung der Abtasteinrichtung in Richtung der Zylinderachse kann dabei in Stufen erfolgen oder kontinuierlich. Bei der stufenweisen Verschiebung tastet jede Sonde die Oberfläche des Fotoleiters auf parallelen Kreisbahnen ab. Bei dieser Art der Abtastung ist jedoch von Nachteil, daß bei jedem Verschiebeschritt die Abtasteinrichtung beschleunigt und anschließend wieder verzögert werden muß. In dieser Hinsicht ist die kontinuierliche Verschiebung günstiger, bei der die Oberfläche von jeder Sonde entlang einer schraubenförmigen Bahn abgetastet wird.

In weiterer Ausgestaltung ist vorgesehen, daß die Influenzsonden der Abtasteinrichtung in Achsrichtung des Trägers gleichmäßig über dem Fotoleiter verteilt sind. Um die Oberfläche des Fotoleiters vollständig erfassen zu können, ist es dabei lediglich erforderlich, die Abtasteinrichtung insgesamt um den Abstand zweier Influenzsonden in Achsrichtung zu verschieben (während der zylinderförmige Träger N Umdrehungen ausführt).

Eine Weiterbildung der Erfindung sieht vor, daß die Drehzahl des Trägers nach der Röntgenbelichtung wesentlich größer ist als während der Röntgenbelichtung. Die Drehzahl bei der Röntgenbelichtung ist durch die Intensität der Röntgenstrahlung nach oben begrenzt. Diese Begrenzung entfällt aber während der Abtastung der Ladungsdichte auf der Oberfläche des Fotoleiters im Anschluß an eine Röntgenbelichtung. Durch die höhere Drehzahl ergibt sich eine größere Auslesegeschwindigkeit; allerdings setzt dies voraus, daß die Influenzsonden und die ihr nachgeschaltete Elektronik die sich dabei ergebenden Frequenzen noch verarbeiten können.

Die Erfindung wird nachstehend anhand der Zeichnung näher erläutert. Es zeigen:

Fig. 1 eine perspektivische Ansicht der wesentlichen Teile einer Ausführungsform der Erfindung,

Fig. 2 eine bevorzugte Abwandlung dieser Ausführungsform,

Fig. 3 eine zweckmäßige Gestaltung der Aufladeeinrichtung,

Fig. 4a bis 4c verschiedene Möglichkeiten der Verschiebung des Röntgenstrahlenfächers synchron mit der Drehung der Trommel,

Fig. 5 ein Röntgenuntersuchungsgerät, das das Antriebsprinzip gemäß Fig. 4c realisiert.

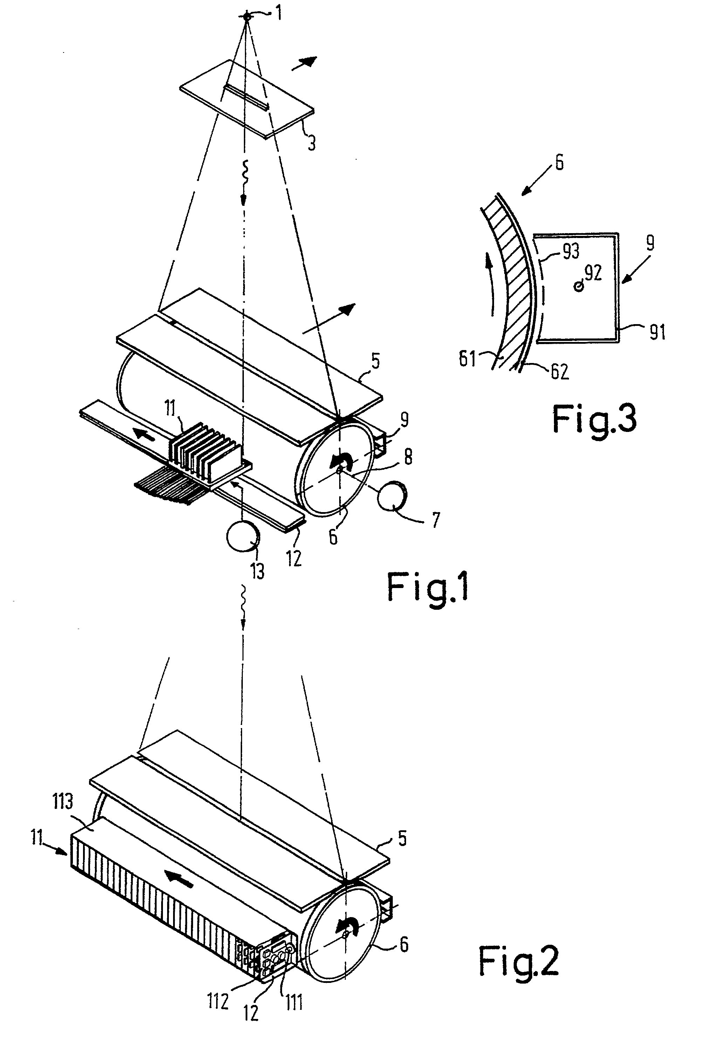

In Fig. 1 ist mit 1 eine Röntgenstrahlenquelle bezeichnet, z.B. eine Röntgenröhre, von der in Fig. 1 jedoch nur der Fokus dargestellt ist, von dem die Röntgenstrahlung ausgeht. Im Strahlengang der Strahlenquelle 1 ist eine erste Blende 3 angeordnet, die eine geradlinige schlitzförmige Öffnung für die Röntgenstrahlung aufweist. Durch diese Öffnung der Blende wird ein fächerförmiges Röntgenstrahlenbündel ausgeblendet, das den nicht näher dargestellten Untersuchungsbereich durchsetzt. Nach Passieren des Untersuchungsbereiches tritt das Röntgenstrahlenbündel durch eine weitere Blende 5 mit einer ebenfalls schlitzförmigen Öffnung, die so geformt ist, daß sie praktisch mit der Projektion der schlitzförmigen Öffnung in der Blende 3 durch die Röntgenstrahlenquelle zusammenfällt. Die durch die schlitzförmige Öffnung in der Blende 5 tretende Röntgenstrahlung trifft auf die Scheitellinie einer Selentrommel 6. Die Selentrommel 6 enthält einen zylindrischen Trägerkörper aus Metall, z.B. Aluminium, der wie schematisch angedeutet mittels eines in der Drehzahl regelbaren Antriebsmotors 7 um seine Achse drehbar ist. Auf den Außenmantel dieses Trägers ist eine ungefähr500 µm starke amorphe Selenschicht aufgebracht, die sich durch Aufdampfen mit großer Gleichmäßigkeit herstellen läßt, wenn während des Aufdampfprozesses der Trägerkörper um seine Achse gedreht wird. Die Trommel hat für die Aufnahme eines Röntgenbildes geeignete Abmessungen, z.B. eine Länge von 400 mm und einen Durchmesser von l50 mm. Anstelle von Selen könnte auch ein anderer Fotoleiter verwendet werden, z.B. Bleioxid; Selen wird jedoch bevorzugt.

Die Erzeugung einer Röntgenaufnahme mit einer derartigen Anordnung erfolgt in drei zeitlich in geringem Abstand aufeinanderfolgenden Phasen:

a) Aufladung

In dieser Phase ist die Röntgenstrahlung ausgeschaltet und die Oberfläche der Selenschicht wird auf ein konstantes Potential aufgeladen. Zu diesem Zweck ist eine sich über die ganze Länge der Trommel 6 erstreckende zur Drehachse 8 parallele Aufladeeinrichtung 9 vorgesehen. Wie sich hierzu im einzelnen aus Fig. 3 ergibt, die einen Teil der Anordnung in Fig. l in einem zur Zylinderachse 8 senkrechten Querschnitt zeigt, umfaßt die Aufladeeinrichtung eine geerdete Schiene 9l aus Metall mit U-förmigem, zur Trommel 6 offenen Querschnitt. Innerhalb der Schiene ist ein dünner Draht 92 - ggf. auch mehrere dünne Drähte - angeordnet, der ein Potential von z.B. 5 kV führt. Die Schiene ist zur Selentrommel 6 hin durch ein Gitter 93 abgeschlossen, das gegenüber der Schiene 9l eine vergleichsweise niedrige negative Vorspannung von z.B. -60 V führt. Das Ganze ist in unmittelbarer Nähe der Selentrommel angeordnet.

Zum Aufladen wird die Betriebsspannung des Drahtes 92 eingeschaltet und die Selentrommel 6 in Drehung versetzt. Gleichzeitig wird der Träger 6l der Selentrommel an eine Spannung gelegt, die allmählich auf einen Wert von z.B. -l.500 V erhöht wird. Die durch die hohe Feldstärke in unmittelbarer Nähe des Drahtes 92 erzeugten positiven Ladungsträger werden durch die hohe negative Vorspannung des Trägers 6l durch das Gitter 93 hindurch auf diesen beschleunigt, bis sie auf die Selenschicht 62 auf den Träger gelangen und diese aufladen. Diese Aufladung der Selenschicht endet, wenn die Ladungsdichte so groß ist, daß die erzeugten Ladungsträger nur noch auf das Gitter 93 oder die Schiene 9l gelangen. Das Potential an der Oberfläche der Selenschicht beträgt dann etwa 0 V. Infolge der Drehung des Trägers ist nach wenigen Umdrehungen die gesamte Oberfläche aufgeladen.

b) Belichtung

Nachdem die Oberfläche der Selentrommel gleichmäßig aufgeladen ist, wird die Strahlenquelle l eingeschaltet. Dabei wird die Trommel 7 mit einer bestimmten Drehzahl, z.B. eine Umdrehung pro Sekunde, gedreht und gleichzeitig wird, wie durch die Pfeile angedeutet, die Einheit l, 3, 5, 6 bewegt mit einer Geschwindigkeit, die von der Drehzahl der Selentrommel 6 abhängt. Die Geschwindigkeit, mit der das Röntgenstrahlenbündel relativ zum Untersuchungsbereich bewegt wird, muß dabei so gewählt sein, daß die Röntgenprojektion eines Punktes im Untersuchungsbereich immer mit dem gleichen Punkt auf der Oberfläche der Trommel zusammenfällt. - Wenn anstelle eines Patienten Werkstücke mit der Einrichtung untersucht werden sollen, ist es auch möglich, die Einheit l, 3, 5, 6 feststehen zu lassen und das Werkstück mit der entsprechenden Geschwindigkeit, jedoch in entgegengesetzter Richtung, zu bewegen. Auf diese Weise ergibt sich eine Spalt- bzw. Schlitzradiografie, bei der das Röntgenschattenbild des zu untersuchenden Objektes sequentiell auf die Selentrommel projiziert wird, wobei die Ladungsdichte an der Oberfläche in Abhängigkeit von der Absorption der Röntgenstrahlung durch den Untersuchungsbereich abnimmt.

Die Höhe der Entladung und damit die Amplitude der von der noch zu beschreibenden Abtasteinrichtung gelieferten Signale, hängt außer von der Intensität der Röntgenstrahlung und ihrer Absorption im Untersuchungsbereich auch davon ab, wie lange die Oberfläche der Röntgenstrahlung ausgesetzt ist. Dieser Zeitraum kann durch eine niedrige Drehzahl der Selentrommel vergrößert werden, jedoch würde sich dann die Dauer der Röntgenbelichtung und dadurch wiederum die Belastung der Röntgenstrahlenquelle vergrößern. Eine günstigere Möglichkeit zur Erhöhung der Belichtungsdauer der einzelnen Abschnitte auf der Trommel ist die Verbreiterung des fächerförmigen Strahlenbündels (durch Verbreiterung der schlitzförmigen Öffnungen in den Blenden 3 und 5). Allerdings sind einer solchen Verbreiterung Grenzen gesetzt, weil dann auch bei einem optimal gewählten Verhältnis der Verschiebung des Strahlenfächers und der Trommeldrehzahl die Projektion eines Punktes im Untersuchungsbereich auf die Selentrommel ihre Lage auf der Selentrommel ändert, so daß die räumliche Auflösung abnimmt. Jedoch kann bei einem Trommeldurchmesser von l50 mm und einem Abstand der Trommel von der Strahlenquelle von l m die Breite der schlitzförmigen Öffnungen in den Blenden 3 und 5 so gewählt werden, daß jeweils ein bis zu 2 cm breiter Streifen auf der Oberfläche der Selentrommel durch die Röntgenstrahlung belichtet wird, so daß jeder Punkt auf der Oberfläche der Selentrommel etwa 40 ms belichtet wird (bei einer Drehzahl der Selentrommel von 60 Umdrehungen pro Minute). Dies ist gegenüber Anordnungen für die Schlitz- bzw. Spaltradiografie mit einer einzigen Detektorzeile, bei denen immer nur eine einzige Bildzeile - eben die Detektorzeile - belichtet wird, ein wesentlicher Vorteil.

## c) Auslesen

In dieser Phase ist die Röntgenstrahlung wieder ausgeschaltet. Ebenso ist - wie schon während der Röntgenbelichtung - die Spannung am Draht 92 und am Gitter 93 der Aufladeeinrichtung 9 abgeschaltet, während der Träger 6l weiterhin eine Spannung von -l.500 V gegenüber Masse führt. Die Ladungsdichte bzw. das Oberflächenpotential an den einzelnen Punkten der Selenschicht 62 ist dann der Röntgenstrahlendosis proportional. Diese Ladungsdichte wird mit Hilfe einer Abtasteinrichtung erfaßt, die mehrere auf einer zur Zylinderachse 8 parallelen Geraden in geringem Abstand von der Trommeloberfläche befindliche Influenzsonden umfaßt, die ein der Ladungsdichte an der Oberfläche entsprechendes elektrisches Signal erzeugen, wobei gleichzeitig die Selentrommel gedreht - vorzugsweise mit einer gegenüber der Belichtung erhöhten Drehzahl, z.B. 600 Umdrehungen pro Minute.

Optimal wäre es, wenn die Abtasteinrichtung in einer Reihe soviel Influenzsonden enthielten, wie eine Bildzeile Bildpunkte aufweist. Nach einer Umdrehung der Selentrommel, d.h. nach 0,l sec, könnte dann die gesamte Ladungsverteilung erfaßt sein. Vergegenwärtigt man sich jedoch, daß eine Bildzeile etwa 2.048 Bildpunkte aufweisen kann, dann müßte die Abtasteinrichtung auf einer 40 cm langen Reihe nebeneinander 2.048 Influenzsonden enthalten. Derartige Abtasteinrichtungen sind aber mit vertretbarem Aufwand kaum herzustellen.

Die Anordnung nach Fig. l umfaßt daher ein im Vergleich zur Länge der Selentrommel kurzes Substrat, auf dem mehrere Sondenelektroden in dichtem Abstand voneinander angeordnet sind. Eine solche Abtasteinrichtung ist aus der DE-OS 29 48 660 bekannt. Sie kann während einer Umdrehung der Selentrommel die Ladungsdichteverteilung jedoch nur auf einem Abschnitt erfassen, der ihrer Länge entspricht. Um die Ladungsdichteverteilung auf der gesamten Länge der Selentrommel erfassen zu können, umfaßt die Abtasteinrichtung eine Führungsschiene l2, die parallel zur Zylinderachse verläuft und auf der die Influenzsonden ll mittels eines Motors l3 verschiebbar sind. Die Influenzsonden müssen dabei schrittweise oder kontinuierlich und während einer Vielzahl von Umdrehungen praktisch über die gesamte Länge der Trommel verschoben werden.

In dieser Hinsicht liegen die Verhältnisse bei der Abwandlung nach Fig. 2 günstiger. Dort ist eine Anzahl von Influenzsonden lll, z.B. 32 Stück, gleichmäßig über die gesamte Länge der Selentrommel verteilt. Die Influenzsonden bilden zusammen mit der auf einer Platine ll2 angeordneten Vorverstärkerelektronik geschlossene Einheiten, die in einem gemeinsamen Rahmen ll3 einjustiert sind. Dieser Rahmen wird während der Bilderfassung mittels der Führungsschiene l2 und des nicht näher dargestellten Antriebsmotors kontinuierlich parallel zur Zylinderachse verschoben. Die gesamte Verschiebungsstrecke entspricht dabei dem Abstand zweier Influenzsonden. Damit kann die Ladungsdichte auf der gesamten Oberfläche der Selentrommel mit ca. 64 Umdrehungen bei einer Bildelementgröße von 200×200 μm² erfaßt werden, was bei der angegebenen Drehzahl eine Auslesezeit von nur rund 6 sec ergibt.

Um die in elektrische Signale umgesetzten Ladungsdichten eindeutig den Bildpunkten zuzuordnen, ist es erforderlich, daß die Position der Influenzsonden relativ zur Selentrommel in jedem Augenblick genau bekannt ist. Zu diesem Zweck ist die Trommel 9 mit einem nicht näher dargestellten inkrementalen Winkelgeber mit entsprechend hoher Auflösung gekoppelt, der ein der jeweiligen Drehstellung der Trommel entsprechendes elektrisches Signal erzeugt. Ebenso muß zur Bestimmung der Position der Einheit ll in Achsrichtung ein geeigneter Positionsgeber vorgesehen sein.

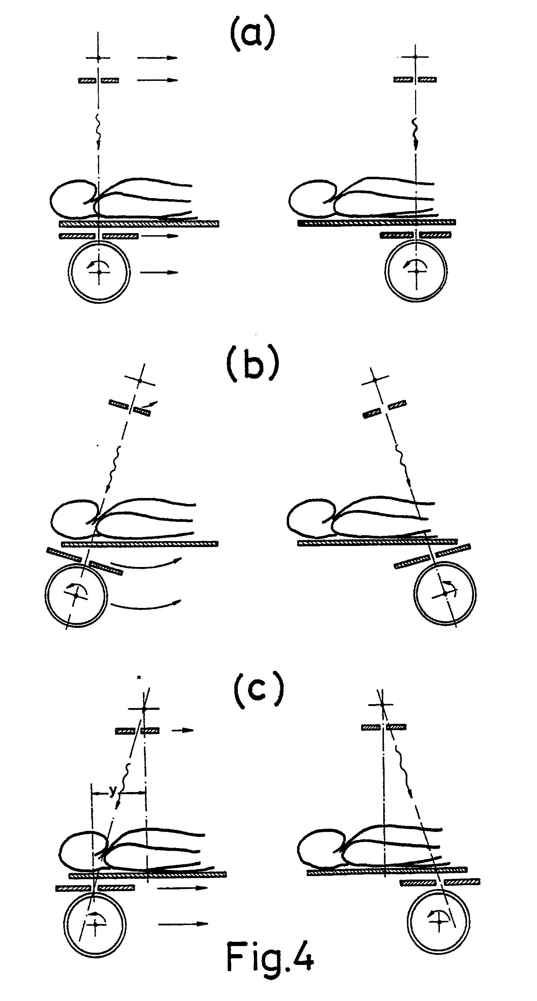

In Fig. 4a bis 4c sind verschiedene Möglichkeiten angedeutet, wie während der Röntgenbelichtung der Röntgenstrahlenfächer relativ zum Untersuchungsbereich - hier symbolisiert durch einen Patienten 4 - verschoben werden kann. Gemäß Fig. 4a sind dabei die Strahlenquelle l, die Blenden 3 und 5 und die Trommel 6 fest miteinander verbunden und bewegen sich geradlinig mit gleicher Geschwindigkeit senkrecht zum Strahlenfächer. Nachteilig ist hierbei, daß die Röntgenstrahlenquelle l meist eine an einem Stativ befestigte Röntgenröhre mit einer nicht unbeträchtlichen Masse relativ schnell um eine relativ große Strecke bewegt werden muß.

Günstiger ist insoweit die in Fig. 4b dargestellte Anordnung, bei der die Strahlenquelle l, die Blenden 3 und 5 und die Selentrommel über eine Pendelstange miteinander gekoppelt sind, die während der Belichtung um eine durch den Brennfleck verlaufende Schwenkachse geschwenkt wird. Dabei braucht die Röntgenröhre lediglich geschwenkt, aber nicht translatorisch bewegt zu werden. Von gewissem Nachteil ist jedoch, daß die Selentrommel dabei auf einer Kreisbahn bewegt wird und der Abstand zwischen Untersuchungsobjekt und Selentrommel stark variiert.

Gemäß Fig. 4c ändert die Strahlenquelle ebenfalls ihre Position nicht, jedoch werden die Blenden 3, 5 und die Selentrommel 6 geradlinig und mit zu ihrem Abstand vom Brennfleck proportionalen Geschwindigkeiten bewegt. Wenn der Abstand zwischen der Blende 5 und dem Scheitel der Selentrommel 6 gering ist, können beide Teile mit gleicher Geschwindigkeit bewegt werden, so daß die Blende 5 fest mit der Halterung der Selentrommel 6 gekoppelt sein kann.

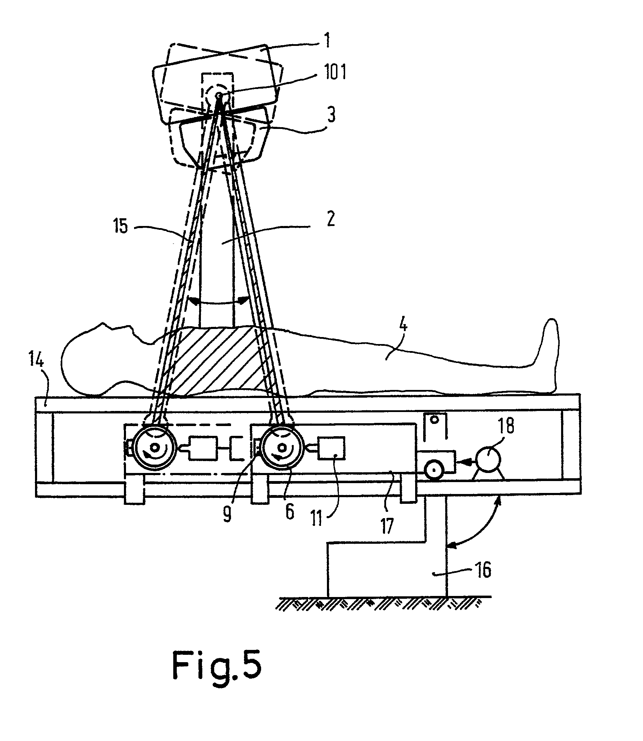

Fig. 5 zeigt ein entsprechend aufgebautes Röntgenuntersuchungsgerät. Die Strahlenquelle l - eine Röntgenröhre - ist dabei an einer vertikalen Säule 2 um eine zur Zeichenebene senkrechte horizontale Schwenkachse schwenkbar befestigt, die durch den Brennfleck l0l der Röntgenröhre verläuft. Unterhalb des Röntgenstrahlers befindet sich eine Blendenanordnung 3 mit einer schlitzförmigen Öffnung, deren Hauptausdehnungsrichtung sich senkrecht zur Zeichenebene der Fig. 5 erstreckt und die ein fächerförmiges Strahlenbündel l5 ausblendet, das den Patienten 4 durchsetzt. Dieser befindet sich auf einem Untersuchungstisch l4, der schwenkbar an einem Gerätefuß l6 befestigt ist. Unterhalb der Patientenlagerungsplatte befindet sich ein Wagen 17, der auf seiner Oberseite mit einer schlitzförmigen Öffnung für das fächerförmige Strahlenbündel versehen ist, unter der die Selentrommel 6 drehbar angeordnet ist. An dem Wagen 17 sind außerdem noch die Aufladeeinrichtung 9 und die Abtasteinrichtung II sowie - nicht näher dargestellt - die Komponenten 7, 12 und 13 (Fig. I) befestigt. Der Wagen ist mittels eines Motors 18 aus der mit ausgezogenen Linien dargestellten Anfangsstellung in die gestrichelt dargestellte Endstellung verfahrbar. Die Fahrgeschwindigkeit entspricht dabei genau der Umfangsgeschwindigkeit der Trommeloberfläche. Der Wagen 17 ist über eine Koppelstange 19 mit dem Röntgenstrahler I gekoppelt, so daß dieser bei der Bewegung des Wagens um eine durch den Brennpunkt 101 verlaufende Achse geschwenkt wird. Dabei wird der schraffierte Bereich des Patienten 4 von Röntgenstrahlung durchsetzt. Wie bereits erwähnt, ist es für eine scharfe Abbildung erforderlich, daß die Fahrgeschwindigkeit des Wagens 17 und die Geschwindigkeit, mit der sich ein Punkt auf der Oberfläche der Selentrommel um die Drehachse 8 bewegt, gleich groß sind. Der Antriebsmotor 18 für den Wagen und der Antriebsmotor 7 für die Selentrommel müssen also elektronisch so synchronisiert sein, daß diese Bedingung stets erfüllt ist.

Diese Bedingung läßt sich jedoch auch erfüllen, wenn die Verschiebebewegung mechanisch aus der Drehbewegung der Trommel abgeleitet ist, wie das an sich aus der US-PS 3,832,546 bekannt ist. Zwischen der Trommel und der Einrichtung, die die Trommelbewegung in eine Verschiebebewegung umsetzt, muß dabei allerdings eine Kupplung vorgesehen sein, damit die Trommel während der Aufladung und während des Auslesens gedreht werden kann, ohne daß eine Verschiebung erfolgt.

## Patentansprüche

I. Anordnung zum Erzeugen von Röntgenaufnahmen mittels eines Röntgenstrahlung in ein Ladungsmuster umsetzenden Fotoleiters mit einer Aufladeeinrichtung zum örtlich gleichmäßigen Aufladen der Oberfläche des Fotoleiters und mit einer Abtasteinrichtung, die zum Übersetzen der Ladungsdichte an verschiedenen Punkten der Oberfläche des Fotoleiters mehrere in einer Reihe angeordnete Influenzsonden enthält, dadurch gekennzeichnet, daß der Fotoleiter (62) auf dem Außenmantel eines kreiszylinderischen Trägers (61) aufgebracht ist, daß die Röntgenstrahlung durch mindestens eine schlitzförmige Blende (3, 5), deren Hauptausdehnungsrichtung parallel zur Zylinderachse (8) des Trägers verläuft, auf den Fotoleiter trifft, daß eine Antriebseinrichtung (7) zum Drehen des Trägers (6) um die Zylinderachse und zum Verschieben des ausgeblendeten Strahlenfächers (15) relativ zum Untersuchungsbereich synchron mit der Drehung des Trägers vorgesehen ist, daß die Influenzsonden (II) in Richtung der Zylinderachse gegeneinander versetzt angeordnet sind, daß die Antriebseinrichtung (7) so gestaltet ist, daß sie den Träger nach der Röntgenbelichtung weiterdreht und daß die Aufladeeinrichtung (9) so gestaltet ist, daß sie den Fotoleiter in Richtung der Zylinderachse auf seiner gesamten Länge aufladen kann.

2. Anordnung nach Anspruch I, dadurch gekennzeichnet, daß eine Einrichtung (13) zur Verschiebung der Abtasteinrichtung (II) parallel zur Zylinderachse vorgesehen ist und daß der Mittelwert der Verschiebungsgeschwindigkeit klein ist im Vergleich zur Umfangsgeschwindigkeit des Trägers (6).

3. Anordnung nach einem der vorhergehenden Ansprüche, dadurch gekennzeichnet, daß die Influenzsonden der Abtasteinrichtung in Achsrichtung des Trägers gleichmäßig über dem Fotoleiter verteilt sind (Fig.2).

4. Anordnung nach einem der vorhergehenden Ansprüche, dadurch gekennzeichnet, daß die Drehzahl des Trägers nach der Röntgenbelichtung wesentlich größer ist als während der Röntgenbelichtung.

5. Anordnung nach einem der vorhergehenden Ansprüche, dadurch gekennzeichnet, daß vor jeder Aufnahme die Aufladeeinrichtung (9) aktiviert und der Träger (6) in Drehung versetzt ist.

## Revendications

1. Système pour l'acquisition d'images de rayons X à l'aide d'un photoconducteur convertissant un rayonnement X en un motif de charge comprenant un dispositif de chargement pour la charge locale régulière de la surface du photoconducteur et un dispositif analyseur qui comprend plusieurs sondes d'influence agencées sur une rangée pour la conversion des densités de charge en divers points de la surface du photoconducteur, caractérisé en ce que le photoconducteur (62) est appliqué sur la périphérie extérieure d'un support cylindrique circulaire (61), que le rayonnement X atteint le photoconducteur à travers au moins un diaphragme en forme de fente (3, 5) dont la direction d'orientation principale est parallèle à l'axe de cylindre (8) du support, qu'il est prévu un dispositif d'entraînement (7) pour faire tourner le support (6) autour de l'axe de cylindre et pour déplacer le faisceau de rayonnement diaphragmé (15) par rapport à la région examinée en synchronisme avec la rotation du support, que les sondes d'influence (11) sont décalées l'une par rapport à l'autre dans la direction de l'axe de cylindre, que le dispositif d'entraînement (7) est agencé de façon qu'il fasse tourner le support après l'exposition aux rayons X et que le dispositif de chargement (9) est agencé de façon qu'il puisse charger le photoconducteur sur toute sa longueur dans le sens de l'axe de cylindre.

2. Système suivant la revendication 1, caractérisé en ce qu'il est prévu un dispositif (13) pour le déplacement du dispositif analyseur (11) parallèlement à l'axe de cylindre et que la valeur moyenne de la vitesse de déplacement est petite en comparaison de celle de la vitesse de rotation du support (6).

3. Système suivant l'une ou l'autre des revendications précédentes, caractérisé en ce que les sondes d'influence du dispositif analyseur (11) sont réparties dans la direction de l'axe du support régulièrement au-dessus du photoconducteur.

4. Système suivant l'une quelconque des revendications précédentes, caractérisé en ce que la vitesse de rotation du support après l'exposition aux rayons X est sensiblement plus grande que pendant l'exposition aux rayons X.

5. Système suivant l'une quelconque des revendications précédentes, caractérisé en ce qu'avant chaque prise de vues, le dispositif de chargement (9) est activé et le support (6) est mis en rotation.

## Claims

1. An arrangement for producing X-ray photographs by means of a photoconductor which converts X-rays into a charge pattern, including a charging device for the locally uniform charging of the surface of the photoconductor and a scanning device which includes a plurality of influence probes which are arranged in a row in order to convert the charge density at various points on the surface of the photoconductor, characterized in that the photoconductor (62) is provided on the outer surface of a circular-cylindrical carrier (61), the X-rays being incident on the photoconductor through at least one slit-shaped diaphragm (3, 5) whose principal dimension extends parallel to tge cylinder axis (8) of the carrier, there being provided a drive device (7) for rotating the carrier (6) about the cylinder axis and for displacing the resultant fan-shaped radiation beam (15) relative to the examination zone in synchronism with the rotation of the carrier, the influence probes (11) being arranged so as to be offset with respect to one another in the direction of the cylinder axis, the drive device (7) being constructed so that it rotates the carrier further after the X-ray exposure, the charging device (9) being constructed so that it can charge the entire length of the photoconductor in the direction of the cylinder axis.

2. An arrangement as claimed in Claim 1, characterized in that there is provided a device (13) for displacing the scanning device (11) parallel to the cylinder axis, the mean value of the speed of displacement being small in comparison with the circumferential speed of the carrier (6).

3. An arrangement as claimed in any one of the preceding Claims, characterized in that the influence probes of the scanning device are uniformly distributed across the photoconductor in the axial direction of the carrier (Fig. 2).

4. An arrangement as claimed in any one of the preceding Claims, characterized in that the number of revolutions of the carrier after the X-ray exposure is substantially higher than that during the X-ray exposure.

5. An arrangement as claimed in any one of the preceding Claims, characterized in that prior to each exposure the charging device (9) is activated and the carrier (6) is rotated.

EP 0 219 897 B1

Fig.1

Fig.2

Fig.3

## (a)

## (b)

## (c)

# Fig.4

Fig.5